# EUROPEAN PATENT APPLICATION

(11) **EP 4 850 989 A1**
(43) Date of publication of application: **09.12.2026**
(21) Application number: 24921592.2
(22) Date of filing: 01.11.2024
(51) Int. Cl.: B60R 16/023, G06V 10/764

(54) **VEHICLE IDENTIFICATION METHOD AND APPARATUS, ELECTRONIC DEVICE, AND STORAGE MEDIUM**

(30) Priority: 30.01.2024 CN 202410133166
(71) Applicant: Guangzhou Automobile Group Co., Ltd., Guangzhou, Guangdong 511434 (CN)
(72) Inventor: WEN, Xiaofeng, Guangzhou, Guangdong 511434 (CN); ZHU, Pengbo, Guangzhou, Guangdong 511434 (CN); XIE, Yanyan, Guangzhou, Guangdong 511434 (CN); HAN, Zhaoming, Guangzhou, Guangdong 511434 (CN); CHEN, Wenqing, Guangzhou, Guangdong 511434 (CN); SONG, Zhengguang, Guangzhou, Guangdong 511434 (CN)
(74) Representative: Metida
(86) International application number: PCT/CN2024/129445
(87) International publication number: WO 2025/161568

(57) **Abstract**

The present application provides a vehicle identification method, an apparatus, an electronic device, and a storage medium. The method includes: determining a power distribution circuit and a bus circuit corresponding to a controller of a vehicle according to configuration information of the vehicle; determining a present current value corresponding to the power distribution circuit and a present network message corresponding to the bus circuit; comparing the present current value corresponding to the power distribution circuit with a standard current value corresponding to the power distribution circuit, and/or comparing the present network message corresponding to the bus circuit with a standard network message corresponding to the bus circuit to obtain an identification result of the vehicle, wherein the identification result is used for characterizing whether the vehicle has been retrofitted or modified, and wherein the standard current value is a current value corresponding to the power distribution circuit determined before the vehicle leaves the factory, and the standard network message is a network message corresponding to the bus circuit determined before the vehicle leaves the factory. According to the present application, whether the vehicle has been retrofitted or modified is identified quickly by monitoring its power distribution circuit and bus circuit.

## Description

### TECHNICAL FIELD

The present application belongs to the technical field of automobiles, and more particularly, to a vehicle identification method, an apparatus, an electronic device, and a storage medium.

### BACKGROUND

With the rapid development of science and technology, automobiles are becoming increasingly common in people's daily lives. In order to achieve more functions, users often retrofit or modify their vehicles. However, some retrofitting or modifications that have not been tested and verified by a complete vehicle manufacturer may pose certain safety hazards to automobiles. For example, if a retrofitted/modified controller is connected to a CAN network and does not go into a sleep mode, it may cause the entire vehicle to lose power, or even damage a complete vehicle battery, and cause the entire vehicle to malfunction, etc. When an automobile is inspected for retrofitting or modification, it is difficult to find the retrofitting or modification problem, which in turn makes it impossible to repair the automobile in a timely manner. Therefore, how to quickly and accurately identify whether a vehicle has been retrofitted or modified has become an urgent problem to be solved.

### SUMMARY

In view of this, embodiments of the present application propose a vehicle identification method, an apparatus, an electronic device, and a storage medium to improve the above-mentioned problems.

According to a first aspect of an embodiment of the present application, a vehicle identification method is provided. The method includes: determining a power distribution circuit and a bus circuit corresponding to a controller of a vehicle according to configuration information of the vehicle; determining a present current value corresponding to the power distribution circuit and a present network message corresponding to the bus circuit; comparing the present current value corresponding to the power distribution circuit with a standard current value corresponding to the power distribution circuit, and/or comparing the present network message corresponding to the bus circuit with a standard network message corresponding to the bus circuit to obtain an identification result of the vehicle, wherein the identification result is used for characterizing whether the vehicle has been retrofitted or modified, and wherein the standard current value is a current value corresponding to the power distribution circuit determined before the vehicle leaves the factory, and the standard network message is a network message corresponding to the bus circuit determined before the vehicle leaves the factory.

According to a second aspect of an embodiment of the present application, a vehicle identification apparatus is provided. The apparatus includes: a configuration information acquisition module configured to determine a power distribution circuit and a bus circuit corresponding to a controller of a vehicle according to configuration information of the vehicle; a first determination module configured to determine a present current value corresponding to the power distribution circuit and a present network message corresponding to the bus circuit; a second determination module configured to compare the present current value corresponding to the power distribution circuit with a standard current value corresponding to the power distribution circuit, and/or to compare the present network message corresponding to the bus circuit with a standard network message corresponding to the bus circuit to obtain an identification result of the vehicle, wherein the identification result is used for characterizing whether the vehicle has been retrofitted or modified, the standard current value is a current value corresponding to the power distribution circuit determined before the vehicle leaves the factory, and the standard network message is a network message corresponding to the bus circuit determined before the vehicle leaves the factory.

According to a third aspect of an embodiment of the present application, an electronic device is provided. The electronic device includes: a processor; a memory having computer-readable instructions stored thereon, which, when executed by the processor, implement the vehicle identification method as described above.

According to a fourth aspect of an embodiment of the present application, a computer-readable storage medium is provided. The computer-readable storage medium has computer-readable instructions stored thereon, wherein when executed by a processor, the computer-readable instructions implement the vehicle identification method as described above.

In the schemes of the present application, the power distribution circuit and the bus circuit corresponding to the controller of the vehicle are determined according to the configuration information of the vehicle. In this way, the present current value of the power distribution circuit and the present network message of the bus circuit can be determined. Furthermore, the present current value of the power distribution circuit can be compared with the standard current value of the power distribution circuit, and/or the present network message of the bus circuit can be compared with the standard network message of the bus circuit, and whether the vehicle has been retrofitted or modified is determined according to the comparison result. According to the schemes proposed in the present application, whether the vehicle has been retrofitted or modified can be determined without the need for additional hardware by monitoring the power distribution circuit and the bus circuit of the vehicle, such that whether the vehicle has been retrofitted or modified can be identified quickly by comparing with the standard current value or the standard network message, thereby improving the identification accuracy.

It should be understood that the above general description and the following detailed description are exemplary and explanatory only, and are not intended to limit the present invention.

### BRIEF DESCRIPTION OF THE DRAWINGS

The accompanying drawings, which are incorporated in and form part of the present specification, illustrate embodiments consistent with the present application and, together with the specification, serve to explain the principles of the present application. Obviously, the accompanying drawings described below are only some embodiments of the present application. For a person of ordinary skill in the art, other drawings can be obtained from these accompanying drawings without any creative effort.
FIG. 1 is a schematic flowchart illustrating a vehicle identification method according to an embodiment of the present application.
FIG. 2 is a schematic diagram of the deployment of a central controller according to an embodiment of the present application.
FIG. 3 is a schematic flowchart illustrating a vehicle identification method according to another embodiment of the present application.
FIG. 4 is a schematic flowchart illustrating a vehicle identification method according to yet another embodiment of the present application.
FIG. 5 is a schematic flowchart illustrating a vehicle identification method according to still another embodiment of the present application.
FIG. 6 is a schematic flowchart illustrating a vehicle identification method according to a further embodiment of the present application.
FIG. 7 is a block diagram of a vehicle identification apparatus according to an embodiment of the present application.
FIG. 8 is a hardware structure diagram of an electronic device according to an embodiment of the present application.

The specific embodiments of the present invention have been illustrated through the above accompanying drawings, and will be described in more detail below. These accompanying drawings and literal descriptions are not intended to limit the concept scope of the present invention in any way, but rather to illustrate the concept of the present invention to those skilled in the art through specific embodiments.

### DETAILED DESCRIPTION

The exemplary embodiments will now be described more fully with reference to the accompanying drawings. However, the exemplary embodiments can be implemented in many forms and should not be construed as being limited to the examples set forth herein; on the contrary, providing these embodiments makes the present application more comprehensive and complete, and fully conveys the concept of exemplary embodiments to those skilled in the art.

It should be noted that the terms "first", "second", etc., in the specification, claims, and the above accompanying drawings of the present invention are used to distinguish similar objects and are not necessarily used to describe a specific sequence or precedence order. It should be understood that the data used in this way can be interchanged where appropriate so that the embodiments of the present invention described herein can be implemented in a sequence other than those illustrated or described herein. Furthermore, the terms "comprising/including" and "having", and any variations thereof, are intended to cover non-exclusive inclusion, such that a process, method, system, product, or device that includes a series of steps or units is not necessarily limited to those steps or units that are explicitly listed, but may include other steps or units that are not explicitly listed or that are inherent to such process, method, product, or device.

Furthermore, the described features, structures, or characteristics may be combined in one or more embodiments in any suitable manner. In the following description, numerous specific details are provided to give a full understanding of embodiments of the present application. However, those skilled in the art will recognize that the technical solutions of the present application can be practiced without one or more of the specific details, or other methods, apparatuses, steps, etc. can be adopted. In other cases, well-known methods, apparatuses, implementations, or operations are not shown or described in detail to avoid obscuring any aspects of the present application.

The block diagrams shown in the accompanying drawings are merely functional entities and do not necessarily correspond to physically independent entities. That is, these functional entities can be implemented in a software form, or in one or more hardware modules or integrated circuits, or in different network and/or processor apparatuses and/or microcontroller apparatuses. The flowcharts shown in the accompanying drawings are merely an illustrative description and does not necessarily include all content and operations/steps, nor does it necessarily have to be performed in the order described. For example, some operations/steps can be broken down, while others can be combined or partially combined. Therefore, the actual execution order may change depending on the actual situations.

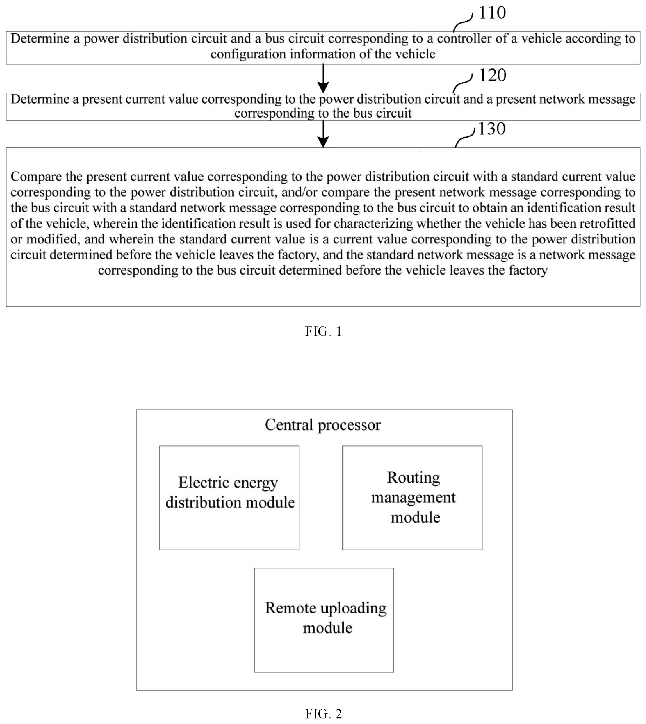

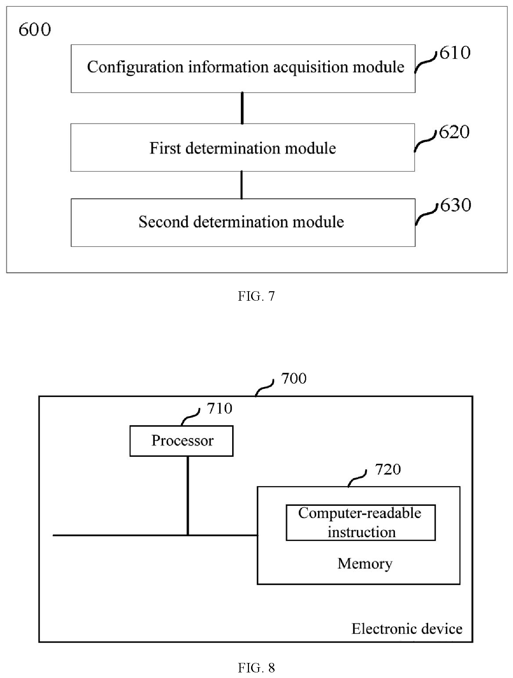

Referring to FIG. 1, a vehicle identification method provided in an embodiment of the present application is illustrated. In a specific embodiment, the vehicle identification method may be applied to a vehicle identification apparatus 600 shown in FIG. 7 and an electronic device 700 (FIG. 8) equipped with the vehicle identification apparatus 600. The specific process of this embodiment will be described below. Of course, it is understood that this method can be executed by a cloud server with computing power. The process shown in FIG. 1 will be described in detail below, which may include the following steps.

In step 110, a power distribution circuit and a bus circuit corresponding to a controller of a vehicle is determined according to configuration information of the vehicle.

In one approach, different vehicles have different configurations, and even vehicles of the same model have different configurations. Different configurations correspond to different controllers, which enable the corresponding functions to be implemented through the controllers. The difference in the controllers may affect a current allocated to each controller by a central controller and the transmission of network messages corresponding to the controllers. Therefore, the configuration information of the vehicle can be acquired first to determine a controller corresponding to the vehicle, and then determine the power distribution circuit and the bus circuit corresponding to the controller. Optionally, the configuration information of the vehicle can be acquired according to a vehicle identification number (VIN) of the vehicle. The VIN consists of 17 characters and is unique identification information for the vehicle. The VIN can be used to trace original information of the vehicle, such as checking configuration, parts, recalls, etc., or can also be used for vehicle management and violation inquiries, such as tracing smuggled or stolen vehicles, and for checking maintenance records, insurance claim records, and tracking historical vehicle conditions. For example, the maintenance, insurance, and mileage information of a used car can be queried through the VIN. Optionally, configuration information corresponding to the VIN can be acquired from the cloud according to the VIN.

Optionally, each controller corresponds to a power distribution circuit and a bus circuit, respectively. The power distribution circuit is configured to power and protect the controller, while the bus circuit is configured to forward and receive the network message corresponding to the controller.

Optionally, an electric energy distribution module, a routing management module, and a remote uploading module may be arranged in the vehicle, as shown in FIG. 2. The electric energy distribution module is configured to achieve power supply and protection functions of a low-voltage power supply in the vehicle. In an embodiment of the present application, the electric energy distribution module has an intelligent power distribution function, which intelligently distributes power supply and performs power distribution protection through an electric energy distribution controller, eliminating the need for traditional hard-wired fuses, and can monitor voltage and current values of the power distribution circuit corresponding to each controller. The routing management module is configured to manage the forwarding of network messages corresponding to the bus circuits of a plurality of controllers. For example, a bus message on a bus circuit 1 needs to be forwarded to a bus circuit 2 through the routing management module to achieve forwarding allocation. The remote uploading module is configured to upload relevant information of the vehicle to the cloud. For example, before a vehicle leaves the factory, its configuration information can be uploaded to the cloud through the remote uploading module.

In some embodiments, step 110 includes: performing fault detection on the vehicle to determine a fault type of the vehicle; and acquiring the configuration information of the vehicle if the fault type is a complete vehicle power feed fault.

In one approach, due to the retrofitting or modification of the vehicle, the corresponding controller corresponding to retrofitting or modification may fail to enter a normal sleep mode or result in the increase of the power consumption, which in turn may lead to a complete vehicle power feed fault. Therefore, in order to quickly check whether the vehicle has been modified or retrofitted, the vehicle can be checked for faults according to a preset cycle to determine whether the vehicle is faulty, and whether the fault type is a complete vehicle power feed fault is determined when the vehicle is faulty, so as to acquire the configuration information of the vehicle when the complete vehicle power feed fault occurs, and identify whether the vehicle has been retrofitted or modified based on the configuration information.

Continued to refer to FIG. 1, in step 120, a present current value corresponding to the power distribution circuit and a present network message corresponding to the bus circuit are determined.

In one approach, the central controller of the vehicle may be configured to acquire the present current values of a plurality of power distribution circuits in real time, as well as network messages respectively corresponding to a plurality of bus circuits in real time. Optionally, the electric energy distribution module may be deployed in the central controller of the vehicle. This electric energy distribution module may be configured to distribute the required electric energy to each power distribution circuit corresponding to each controller. Therefore, the present current value corresponding to each power distribution circuit can be acquired in real time through the electric energy distribution module.

Optionally, the routing management module is deployed in the central controller of the vehicle to manage the network messages sent by the plurality of bus circuits of the vehicle. Therefore, the routing management module can acquire the current network message corresponding to each of the plurality of bus circuits in real time.

In step 130, the present current value corresponding to the power distribution circuit is compared with a standard current value corresponding to the power distribution circuit, and/or the present network message corresponding to the bus circuit is compared with the standard network message corresponding to the bus circuit to obtain an identification result of the vehicle, wherein the identification result is used for characterizing whether the vehicle has been retrofitted or modified, and wherein, the standard current value is a current value corresponding to the power distribution circuit determined before the vehicle leaves the factory, and the standard network message is a network message corresponding to the bus circuit determined before the vehicle leaves the factory.

In one approach, before a vehicle leaves the factory, the standard current value corresponding to each of the power distribution circuits and the standard network message corresponding to each of the plurality of bus circuits can be predetermined and uploaded to the cloud, which facilitates acquiring the standard current value corresponding to each of the plurality of power distribution circuits and the standard network message corresponding to each of the plurality of bus circuits from the cloud. Optionally, the standard current values corresponding to the plurality of power distribution circuits of the vehicle and the standard network messages corresponding to the plurality of bus circuits can be stored in association with the VIN of the vehicle to obtain a standard data table, as shown in Table 1. In this way, when the configuration information of the vehicle is acquired according to the VIN, the standard current values corresponding to the plurality of power distribution circuits and the standard network messages corresponding to the plurality of bus circuits of the vehicle can be acquired at the same time.

**Table 1 Standard data table for vehicle**

| VIN | xxxxxxxxxxxxxxxxx |
|---|---|
| A first standard current value of a first power distribution circuit | 10 mA |
| A second standard current value of a second power distribution circuit | 5 mA |
| ... | ... |
| An n^{th} standard current value of an n^{th} power distribution circuit | xx mA |
| A first standard network message of a first bus circuit | ID1: xxx; cycle1: xxx |
| | ID2: xxx; cycle2: xxx |
| | ... |
| A second standard network message of a second | ID1: xxx; cycle1: xxx |
| bus circuit | ID2: xxx; cycle2: xxx |
| | ... |
| ... | ... |
| An n^{th} standard network message of an n^{th} bus circuit | ID1: xxx; cycle1: xxx |
| | ID2: xxx; cycle2: xxx |
| | ... |

In Table 1, the standard network messages corresponding to the plurality of bus circuits include node addresses of nodes in each bus circuit (i.e., ID in Table 1) and node cycles of the nodes in each bus circuit (i.e., cycles in Table 1). The node cycle may be a cycle during which each node sends node messages.

Optionally, the present current value corresponding to each of the plurality of power distribution circuits may be compared with the standard current values corresponding to the plurality of power distribution circuits, or the present current values corresponding to the plurality of power distribution circuits are added to the standard data table for comparison. Similarly, the present network messages corresponding to the plurality of bus circuits may be compared with the standard network messages corresponding to the plurality of bus circuits, or the present network messages corresponding to the plurality of bus circuits are added to the standard data table for comparison, as shown in Table 2.

**Table 2 Data comparison table for vehicle**

| | | Time stamp |
|---|---|---|
| VIN | xxxxxxxxxxxxxxxxx | |
| A first standard current value of a first power distribution circuit | 10 mA | 10 mA |
| A second standard current value of a second power distribution circuit | 5 mA | 5 mA |
| ... | ... | ... |
| An n^{th} standard current value of an n^{th} power distribution circuit | xx mA | xx mA |
| A first standard network message of a first bus circuit | ID1: xxx; cycle1: xxx | ID1: xxx; cycle1: xxx |
| | ID2: xxx; cycle2: xxx | ID2: xxx; cycle2: xxx |
| | ... | ... |
| A second standard network message of a second bus circuit | ID1: xxx; cycle1: xxx | ID1: xxx; cycle1: xxx |
| | ID2: xxx; cycle2: xxx | ID2: xxx; cycle2: xxx |
| | ... | ... |
| ... | ... | ... |
| An n^{th} standard network message of an n^{th} bus circuit | ID1: xxx; cycle1: xxx | ID1: xxx; cycle1: xxx |
| | ID2: xxx; cycle2: xxx | ID2: xxx; cycle2: xxx |
| | ... | ... |

Table 2 includes timestamps acquired from the present current values corresponding to the plurality of power distribution circuits and the present network messages corresponding to the plurality of bus circuits. In this way, the present current values corresponding to the plurality of power distribution circuits can be compared quickly with the standard current values corresponding to the plurality of power distribution circuits, and/or the present network messages corresponding to the plurality of bus circuits are compared with the standard network messages corresponding to the plurality of bus circuits, thereby obtaining an identification result.

Optionally, the identification results may include determination of whether the vehicle has been retrofitted/modified and determination of whether the vehicle has not been retrofitted/modified. Optionally, if the comparison results show that the present current value corresponding to each of the plurality of power distribution circuits is equal to the standard current value corresponding to each of the plurality of power distribution circuits, and/or that the present network message corresponding to each of the plurality of bus circuits is the same as the standard network message corresponding to each of the plurality of bus circuits, the identification result can be determined as confirming that the vehicle has not been retrofitted/modified. If the comparison results show that the present current value corresponding to each of the plurality of power distribution circuits is not equal to the standard current value corresponding to each of the plurality of power distribution circuits, or that the present network message corresponding to each of the plurality of bus circuits is not the same as the standard network message corresponding to each of the plurality of bus circuits, the identification result can be determined as confirming that the vehicle has been retrofitted/modified.

In an embodiment of the present application, the power distribution circuit and the bus circuit corresponding to the controller of the vehicle are determined through the configuration information of the vehicle, such that the present current value of the power distribution circuit and the present network message of the bus circuit can be determined. Furthermore, the present current value corresponding to the power distribution circuit can be compared with the standard current value of the power distribution circuit, and/or the present network message corresponding to the bus circuit can be compared with the standard network message of the bus circuit, and whether the vehicle has been retrofitted or modified can be determined based on the comparison result. According to the schemes proposed in the present application, whether the vehicle has been retrofitted or modified can be determined without the need for additional hardware by monitoring the power distribution circuits and the bus circuits of the vehicle. In this way, whether the vehicle has been retrofitted or modified can be identified quickly, and determined by comparing with the standard current values or the standard network messages, thereby improving the identification accuracy.

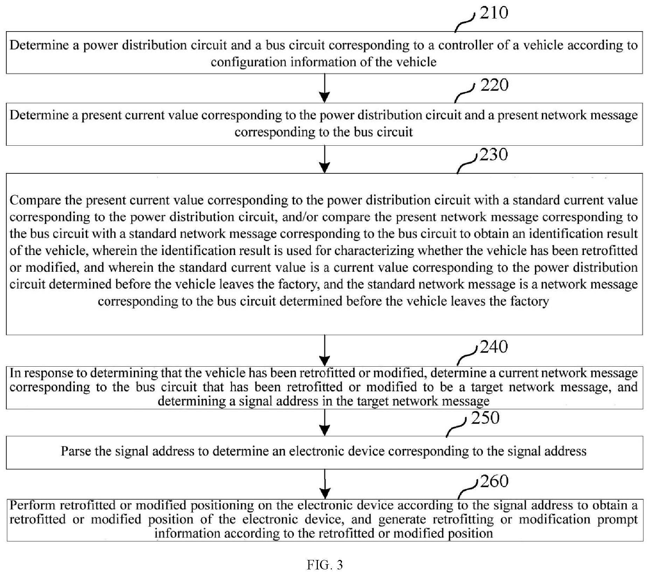

Referring to FIG. 3, a vehicle identification method provided according to an embodiment of the present application is illustrated. The process shown in FIG. 3 will be described in detail below, which may specifically include the following steps.

In step 210, a power distribution circuit and a bus circuit corresponding to a controller of a vehicle are determined according to configuration information of the vehicle.

In step 220, a present current value corresponding to the power distribution circuit and a present network message corresponding to the bus circuit are determined.

In step 230, the present current value corresponding to the power distribution circuit is compared with the standard current value corresponding to the power distribution circuit, and/or the present network message corresponding to the bus circuit is compared with the standard network message corresponding to the bus circuit to obtain an identification result of the vehicle, wherein the identification result is used for characterizing whether the vehicle has been retrofitted or modified, and wherein, the standard current value is a current value corresponding to the power distribution circuit determined before the vehicle leaves the factory, and the standard network message is a network message corresponding to the bus circuit determined before the vehicle leaves the factory.

The specific steps 210-230 may refer to steps 110-130, and will not be repeated here.

In step 240, In response to determining that the vehicle has been retrofitted or modified, the current network message corresponding to the bus circuit that has been retrofitted or modified is determined to be a target network message, and a signal address in the target network message is determined.

In one approach, since the network message corresponding to each of the plurality of bus circuits may include the signal addresses of the nodes in each bus circuit, the functions or electronic devices corresponding to the node may be determined based on the signal address of the node. Therefore, when it is determined that the vehicle has been retrofitted or modified, the network message that is different from the corresponding standard network message among the network messages corresponding to the plurality of bus circuits is determined as the target network message, and the signal address corresponding to each node is determined in the target network message.

In step 250, the signal address is parsed to determine the electronic device corresponding to the signal address.

In one approach, after the signal addresses of the nodes in the target network message are determined, they may be compared with signal addresses of the nodes in the standard network message corresponding to the target network message to determine newly added signal addresses, which may then be parsed. Optionally, the signal addresses may be compared with a preset signal address to determine the electronic device corresponding to the signal address. The preset signal address may be a signal address of an electronic device that has the same address on different vehicles. For example, the same Bluetooth device has the same signal address on different vehicles, which may then determine the electronic device corresponding to the signal address.

In step 260, the electronic device is retrofitted or modified according to the signal address to obtain a retrofitted or modified position of the electronic device, and retrofitting or modification prompt information is generated according to the retrofitted or modified position.

In one approach, after the electronic device corresponding to the signal address is determined, in order to make vehicle maintenance personnel or a vehicle owner know a fault caused by the retrofitting or modification of the vehicle as soon as possible, the electronic device can be retrofitted or modified according to the signal address. Optionally, the signal address may include a controller to which the electronic device is connected, such that the power distribution circuit to which the signal address is connected can be determined, and then retrofitting positioning or modification positioning can be performed according to the controller to which the electronic device is connected and the power distribution circuit to which the electronic device is connected.

Optionally, the retrofitted or modified position of the electronic device may include specific positions of the controller to which the electronic device is connected or the power distribution circuit to which the electronic device is connected. Optionally, a retrofitting or modification prompt may be in the form of image information. After the retrofitting or modification prompt is generated, it can be displayed on a large infotainment screen of the vehicle or an electronic device communicated with the vehicle to inform the vehicle owner or maintenance personnel of a retrofitting position or modification position where a fault occurs. Optionally, the retrofitting or modification prompt may also be displayed as text pop-ups or as voice, depending on actual needs, which will not be specifically limited here.

In this embodiment, when it is determined that the vehicle has been retrofitted or modified, the signal address is determined based on the target network message of the bus circuit where the retrofitting or modification occurs, such that the signal address can be parsed to determine the electronic device corresponding to the signal address. Then, the electronic device is subjected to retrofitting positioning or modification positioning according to the signal address to obtain the retrofitting position or the modification position, such that retrofitting prompt information or modification prompt information is generated to make a prompt on the retrofitting or modification of the vehicle quickly, thereby improving the troubleshooting efficiency.

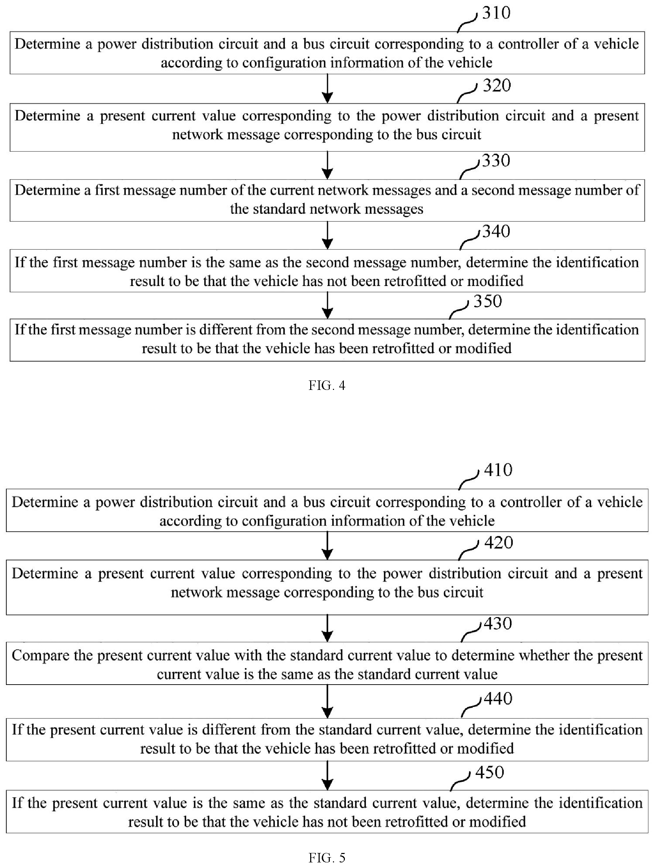

Referring to FIG. 4, a vehicle identification method provided in an embodiment of the present application is illustrated. The process shown in FIG. 4 will be described in detail below. For each of the plurality of bus circuits, the specific steps may be included.

In step 310, a power distribution circuit and a bus circuit corresponding to a controller of a vehicle is determined according to configuration information of the vehicle.
step 320, a present current value corresponding to the power distribution circuit and a present network message corresponding to the bus circuit are determined.

The specific steps 310-320 may refer to steps 110-120, and will not be repeated here.

In step 330, a first message number of the present network messages and a second message number of standard network messages are determined.

In one approach, since a plurality of nodes may exist under each controller and different nodes are used to implement different functions, each node may send its corresponding node message to the bus circuit of the corresponding controller. The corresponding bus circuit generates the present network message according to the received node message of each node. When the vehicle has been retrofitted or modified, the number of nodes corresponding to the controller increases, and the number of corresponding node messages increases. Therefore, whether the vehicle has been retrofitted or modified by comparing the first message number of the present network messages with the second message number of the standard network messages.

Optionally, the first message number can be determined in the present network message by determining the number corresponding to node IDs. Similarly, the second message number can be determined in the standard network message by determining the number corresponding to node IDs.

In step 340, if the first message number is the same as the second message number, an identification result is determined to be that the vehicle has not been retrofitted or modified.

In one approach, when the first message number is the same as the second message number, it can be determined that there is no newly added node in the controller corresponding to the present network message, that is, there is no newly connected electronic device in the controller. In this way, the identification result of the vehicle can be determined to be that the vehicle has not been retrofitted or modified.

In step 350, if the first message number is different from the second message number, the identification result is determined to be that the vehicle has been retrofitted or modified.

In one approach, when the first message number is different from the second message number, it can be determined that there is a newly added node in the controller corresponding to the present network message, that is, there is a newly connected electronic device in the controller. In this way, the identification result of the vehicle can be determined to be that the vehicle has been retrofitted or modified.

In some embodiments, after step 320, the method further includes: determining a first transmission cycle of the present network message, and determining a second transmission cycle of the standard network message; if the first transmission cycle is the same as the second transmission cycle, determining the identification result to be that the vehicle has not been retrofitted or modified; or if the first transmission cycle is different from the second transmission cycle, determining the identification result to be that the vehicle has been retrofitted or modified.

In one approach, since a plurality of nodes may exist under each controller and different nodes are used to implement different functions, each node sends its corresponding node message to the bus circuit of the corresponding controller according to its corresponding cycle. The corresponding bus circuit generates the present network message based on the received node message of each node. When the vehicle has been retrofitted or modified, a cycle of a newly added node in the controller may be different from a cycle of other node, which in turn leads to the change in the transmission cycle of the present network message sent by the corresponding bus circuit of the controller. Therefore, it can be determined whether the vehicle has been retrofitted or modified by comparing the first transmission cycle of the present network message with the second transmission cycle of the standard network message. For example, if a car owner buys a head unit for a particular model and replaces the original head unit with another one, the cycle of the bus circuit corresponding to a controller where the head unit is located will change after the corresponding head unit is changed. Therefore, it can be determined whether the head unit has changed by comparing the first transmission cycle of the present message of the bus circuit corresponding to the controller where the main unit is located with the second transmission cycle, stored in the cloud, of the standard network message of the bus circuit corresponding to the controller where the maintained head unit of the vehicle which leaves the factory is located.

In this embodiment, the first network number of the present network messages corresponding to each of the plurality bus circuits is compared with the second message number of the standard network messages corresponding to each of the plurality of bus circuits, such that whether the vehicle is retrofitted or modified is determined according to whether the first message number is the same as the second message number, thereby improving the efficiency of checking whether the vehicle has been retrofitted or modified.

Referring to FIG. 5, a vehicle identification method provided in an embodiment of the present application is illustrated. The process shown in FIG. 5 will be described in detail below. For each of the plurality of power distribution circuits, the specific steps may be included.

In step 410, a power distribution circuit and a bus circuit corresponding to a controller of a vehicle according to configuration information of the vehicle.

In step 420, a present current value corresponding to the power distribution circuit and a present network message corresponding to the bus circuit are determined.

The specific steps 410-420 may refer to steps 110-120, and will not be repeated here.

In step 430, the present current value is compared with the standard current value to determine whether the present current value is the same as the standard current value.

In one approach, when the vehicle is modified or retrofitted, the power distribution circuit corresponding to a controller at a retrofitted or modified position changes. If retrofitting occurs, a node for distributing electrical energy is added to the corresponding power distribution circuit, thereby increasing a current value corresponding to the power distribution circuit. If modification occurs, the electric energy distribution of the corresponding power distribution circuit will change, and the current value will be different from that before the modification occurs. Therefore, it can be determined whether the vehicle has been retrofitted or modified by comparing the present current value of the power distribution circuit with the standard current value of the power distribution circuit.

In step 440, if the present current value is different from the standard current value, the identification result is determined to be that the vehicle has been retrofitted or modified.

In one approach, when the present current value is determined to be different from the standard current value, it can be determined that a new node is added or a node has been changed in the power distribution circuit corresponding to the present current value, such that the identification result of the vehicle can be determined to be that the vehicle has been retrofitted or modified.

In step 450, if the present current value is the same as the standard current value, the identification result is determined to be that the vehicle has not been retrofitted or modified.

In one approach, when the present current value is determined to be the same as the standard current value, it can be determined that the node in the power distribution circuit corresponding to the present current value has not changed, such that the identification result of the vehicle can be determined to be that the vehicle has been retrofitted or modified.

In this embodiment, the present current value corresponding to each of the plurality of power distribution circuits is compared with the standard current value corresponding to each of the plurality of power distribution circuits, such that whether the vehicle has been retrofitted or modified is determined according to whether the present current value is the same as the standard current value, thereby improving the efficiency of checking whether the vehicle has been retrofitted or modified.

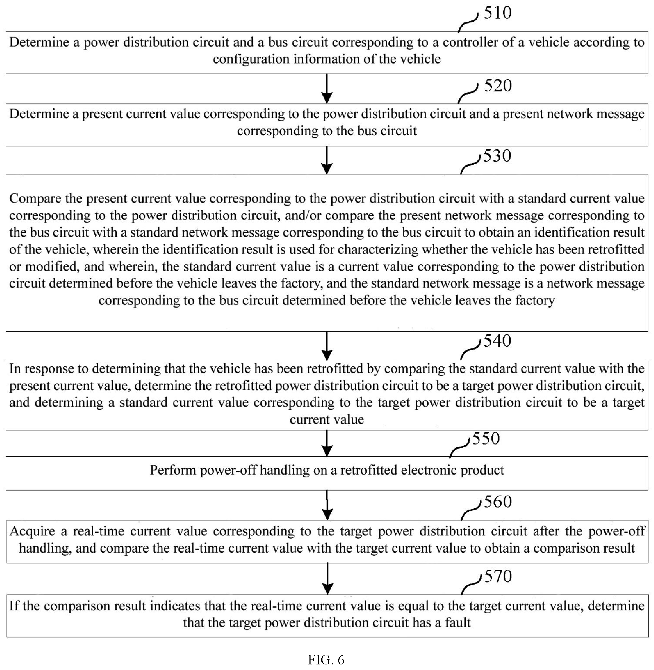

Referring to FIG. 6, a vehicle identification method provided in an embodiment of the present application is illustrated. The process shown in FIG. 6 will be described in detail below, and the following steps may be included.

In step 510, a power distribution circuit and a bus circuit corresponding to a controller of a vehicle are determined according to configuration information of the vehicle.

In step 520, a present current value corresponding to the power distribution circuit and a present network message corresponding to the bus circuit are determined.

In step 530, the present current value corresponding to the power distribution circuit is compared with the standard current value corresponding to the power distribution circuit, and/or the present network message corresponding to the bus circuit is compared with the standard network message corresponding to the bus circuit to obtain an identification result of the vehicle, wherein the identification result is used for characterizing whether the vehicle has been retrofitted or modified, and wherein, the standard current value is a current value corresponding to the power distribution circuit determined before the vehicle leaves the factory, and the standard network message is a network message corresponding to the bus circuit determined before the vehicle leaves the factory.

The specific steps 510-530 may refer to steps 110-130, and will not be repeated here.

In step 540, in response to determining that the vehicle has been retrofitted by comparing the standard current value with the present current value, the retrofitted power distribution circuit is determined to be a target power distribution circuit, and a standard current value corresponding to the target power distribution circuit is determined to be a target current value.

In one approach, when it is determined that the present current value is different from the standard current value by comparing the standard current value with the present current value, it can be determined that the vehicle has been retrofitted. In this case, in order to avoid a complete vehicle power feed fault caused by an electronic device at the retrofitted position not going into a sleep mode, and even a damage to a vehicle's battery, the electronic device at the retrofitted position can be subjected to power-off handling in a timely manner to handle the fault. In this way, the power distribution circuit where the retrofitted electronic device is located can be determined first, such that the fault can be handled by controlling the electric energy distribution of the power distribution circuit.

Optionally, after the target power distribution circuit is determined, the standard current value of this power distribution circuit may be determined based on a circuit identifier of the target power distribution circuit, thereby obtaining the target current value.

In step 550, the retrofitted electronic product is subjected to power-off handling.

In one approach, after the target power distribution circuit is determined, a newly added node in the target power distribution circuit can be determined, such that the target power distribution circuit can be controlled to prevent power supply to the newly added node, thereby enabling the power-off handling of the retrofitted electronic product.

In step 560, a real-time current value corresponding to the target power distribution circuit after the power-off handling is acquired, and compared with the target current value to obtain a comparison result.

In one approach, after the retrofitted electronic product is subjected to power-off handling, whether the corresponding fault has been repaired can be determined by checking whether the real-time current value of the target power distribution circuit after power-off handling is the same as the target current value corresponding to the target power distribution circuit, and whether the vehicle has a fault caused by retrofitting can be determined. Optionally, the comparison result includes the real-time current value being the same as the target current value and the real-time current value being different from the target current value.

In step 570, if the comparison result indicates that the real-time current value is equal to the target current value, it is determined that the target power distribution circuit has a fault.

In one approach, if the comparison result indicates that the real-time current value is the same as the target current value, it can be determined that after the retrofitted electronic product is subjected to power-off handling, the node in the target power distribution circuit is the same as that before retrofitting, and its current value is the same as the target current value used as a standard. This indicates that the fault has been repaired, and that the retrofitted electronic product in the target power distribution circuit causes a fault in the target power distribution circuit.

In this embodiment, when it is determined that the vehicle has been retrofitted according to the standard current value and the present current value, the retrofitted power distribution circuit is determined as the target power distribution circuit. After the retrofitted electronic product is subjected to power-off handling, the real-time current value of the target power distribution circuit is determined. In this way, the comparison result is determined according to the real-time current value and the target current value of the target power distribution circuit. Based on the comparison result, it is determined whether the target power distribution circuit has a fault, such that a fault caused by retrofitting of the vehicle can be checked quickly.

FIG. 7 is a block diagram of a vehicle identification apparatus according to an embodiment of the present application. As shown in FIG. 7, the vehicle identification apparatus 600 includes: a configuration information acquisition module 610, a first determination module 620, and a second determination module 630.

The configuration information acquisition module 610 is configured to determine a power distribution circuit and a bus circuit corresponding to a controller of a vehicle according to configuration information of the vehicle. The first determination module 620 is configured to determine a present current value corresponding to the power distribution circuit and a present network message corresponding to the bus circuit. The second determination module 630 is configured to compare the present current value corresponding to the power distribution circuit with a standard current value corresponding to the power distribution circuit, and/or compare the present network message corresponding to the bus circuit with a standard network message corresponding to the bus circuit to obtain an identification result of the vehicle, wherein the identification result is used for characterizing whether the vehicle has been retrofitted or modified, and wherein the standard current value is a current value corresponding to the power distribution circuit determined before the vehicle leaves the factory, and the standard network message is a network message corresponding to the bus circuit determined before the vehicle leaves the factory.

In some embodiments, the vehicle identification apparatus 600 further includes: a signal address determination module, configured to, in response to determining that the vehicle has been retrofitted or modified, determine a current network message corresponding to the bus circuit that has been retrofitted or modified to be a target network message, and determine a signal address in the target network message; an electronic device determination module, configured to parse the signal address and determine an electronic device corresponding to the signal address; and a prompt information determination module, configured to perform retrofitted or modified positioning on the electronic device according to the signal address to obtain a retrofitted or modified position of the electronic device, and generate retrofitting or modification prompt information according to the retrofitted or modified position.

In some embodiments, a plurality of bus circuits are provided, and a plurality of network messages are provided. The second determination module 630 includes: a message number determination unit, configured to determine a first message number of the present network message and a second message number of the standard network message; a first determination unit, configured to determine the identification result to be that the vehicle has not been retrofitted or modified if the first message number is the same as the second message number; or a second determination unit, configured to determine, if the first message number is different from the second message number, the identification result to be that the vehicle has been retrofitted or modified.

In some embodiments, the second determining module 630 includes: a cycle determination unit, configured to determine a first transmission cycle of the present network message and a second transmission cycle of the standard network message; a third determination unit, configured to determine, if the first transmission cycle is the same as the second transmission cycle, the identification result being that the vehicle has not been retrofitted or modified; or a fourth determination unit, configured to determine, if the first transmission cycle is different from the second transmission cycle, the identification result to be that the vehicle has been retrofitted or modified.

In some embodiments, the second determination module 630 includes: a comparison unit, configured to compare the present current value with the standard current value to determine whether the present current value is the same as the standard current value; a fifth determination unit, configured to determine, if the present current value is different from the standard current value, the identification result to be that the vehicle has been retrofitted or modified; or a sixth determination unit, configured to determine, if the present current value is the same as the standard current value, the identification result to be that the vehicle has not been retrofitted or modified.

In some embodiments, the configuration information acquisition module 610 includes: a fault type determination unit, configured to perform fault detection on the vehicle and determine a fault type of the vehicle; and a configuration information acquisition unit, configured to acquire the configuration information of the vehicle if the fault type is a complete vehicle power feed fault.

In some embodiments, the vehicle identification apparatus 600 further includes: a target current value determination module, configured to determine the retrofitted power distribution circuit to be a target power distribution circuit in response to determining that the vehicle has been retrofitted by comparing the standard current value with the present current value, and to determine the standard current value corresponding to the target power distribution circuit to be a target current value; a power-off handling module, configured to perform power-off handling on the retrofitted electronic product; a comparison result determination module, configured to acquire a real-time current value corresponding to the target power distribution circuit after the power-off handling, and compare the real-time current value with the target current value to obtain a comparison result; and a fault determination module, configured to determine that the target power distribution circuit has a fault if the comparison result indicates that the real-time current value is equal to the target current value.

According to one aspect of an embodiment of the present application, an electronic device is also provided. As shown in FIG. 8, the vehicle 700 includes a processor 710 and one or more memories 720. The one or more memories 720 are configured to store program instructions executed by the processor 710, which, when executed by the processor 710, implement the above-described code conversion method.

Furthermore, the processor 610 may include one or more processing cores. The processor 610 runs or executes instructions, programs, code sets, or instruction sets stored in the memory 620, and calls data stored in the memory 620. Optionally, the processor 610 may be implemented in at least one of the following hardware forms: digital signal processing (DSP), a field-programmable gate array (FPGA), and a programmable logic array (PLA). The processor 610 may integrate one of or a combination of more of a central processing unit (CPU), a graphics processing unit (GPU), and a modem. The CPU primarily processes an operating system, a user interface, applications, etc. The GPU is responsible for rendering and drawing the displayed content. The modem is configured to process wireless communication. It is understandable that the aforementioned modem may not be integrated into the processor and may be implemented using a separate communication chip.

According to one aspect of the present application, the present application further provides a computer-readable storage medium, which may be included in the electronic device described in the above embodiments, or can also exist independently, without being assembled into the electronic device. The aforementioned computer-readable storage medium carries computer-readable instructions which, when executed by a processor, implement the method in any of the above embodiments.

It should be noted that the computer-readable medium shown in an embodiment of the present application may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but is not limited to: an electrical connection having one or more wires, a portable computer disk, a hard disk, a random access memory (RAM), a read-only memory (ROM), an erasable programmable read-only memory (EPROM), a flash memory, optical fiber, a portable compact disc read-only memory (CD-ROM), an optical storage device, a magnetic storage device, or any suitable combination thereof. In the present application, the computer-readable storage medium may be any tangible medium that contains or stores a program that can be used by or in conjunction with an instruction execution system, apparatus or device. In the present application, the computer-readable signal medium may include data signals propagated in baseband or as part of carrier waves, wherein computer-readable program codes are carried. The propagated data signals can take many forms, including but not limited to electromagnetic signals, optical signals, or any suitable combination thereof. The computer-readable signal medium may also be any computer-readable medium other than a computer-readable storage medium, which can send, propagate or transmit a program for use by or in connection with an instruction execution system, apparatus or device. The program codes contained on the computer-readable medium may be transmitted using any suitable medium, including but not limited to: wireless transmission, wired transmission, etc., or any suitable combination thereof.

The units described in an embodiment of the present application can be implemented in software or hardware, and the described units can also be located in a processor. In some cases, the names of these units do not constitute a limitation on the unit themselves.

The flowcharts and block diagrams in the accompanying drawings illustrate architectures, functionality, and operations of possible implementations of systems, methods and computer program products according to various embodiments of the present application. Each box in the flowchart or block diagram may represent one module, program segment, or part of code, which contains one or more executable instructions for implementing specified logical functions. It should also be noted that in some alternative implementations, the functions marked in the box may occur in a different order than those marked in the accompanying drawings. For example, two consecutively represented boxes can actually be executed in an essentially parallel manner, or sometimes in reverse order, depending on the functionality involved. It should also be noted that each box in a block diagram or flowchart, as well as combinations of boxes in a block diagram or flowchart, can be implemented using a dedicated hardware-based system that performs the specified function or operation, or using a combination of dedicated hardware and computer instructions.

Other embodiments of the present application will readily be apparent to those skilled in the art upon consideration of the specification and practice of the embodiments disclosed herein. The present application is intended to cover any variations, uses, or adaptations of the present application that follow the general principles of the present application and include common knowledge or customary technical means in the art that are not disclosed in the present application.

It should be understood that the present application is not limited to the precise structure described above and shown in the accompanying drawings, and various modifications and changes can be made without departing from its scope. The scope of the present application is limited only by the appended claims.

## Claims

1. A vehicle identification method, **characterized by** comprising:
determining a power distribution circuit and a bus circuit corresponding to a controller of a vehicle according to configuration information of a vehicle;
determining a present current value corresponding to the power distribution circuit and a present network message corresponding to the bus circuit;
comparing the present current value corresponding to the power distribution circuit with a standard current value corresponding to the power distribution circuit, and/or comparing the present network message corresponding to the bus circuit with a standard network message corresponding to the bus circuit to obtain an identification result of the vehicle, wherein the identification result is used for characterizing whether the vehicle has been retrofitted or modified, and wherein the standard current value is a current value corresponding to the power distribution circuit determined before the vehicle leaves the factory, and the standard network message is a network message corresponding to the bus circuit determined before the vehicle leaves the factory.

2. The method according to claim 1, wherein after comparing the current network message corresponding to the bus circuit with the standard network message corresponding to the bus circuit to obtain the identification result of the vehicle, the method further comprises:
in response to determining that the vehicle has been retrofitted or modified, determining a current network message corresponding to the bus circuit that has been retrofitted or modified to be a target network message, and determining a signal address in the target network message;
parsing the signal address to determine an electronic device corresponding to the signal address; and
performing retrofitted or modified positioning on the electronic device according to the signal address to obtain a retrofitted or modified position of the electronic device, and generating retrofitting or modification prompt information according to the retrofitted or modified position.

3. The method according to claim 1, wherein a plurality of bus circuits are provided, and a plurality of network messages are provided; and for each bus circuit, comparing the current network message corresponding to the bus circuit with the standard network message corresponding to the bus circuit to obtain the identification result of the vehicle comprises:
determining a first message number of the current network messages and a second message number of the standard network messages;
if the first message number is the same as the second message number, determining the identification result to be that the vehicle has not been retrofitted or modified; or
if the first message number is different from the second message number, determining the identification result to be that the vehicle has been retrofitted or modified.

4. The method according to claim 1, wherein comparing the current network message corresponding to the bus circuit with the standard network message corresponding to the bus circuit to obtain the identification result of the vehicle comprises:
determining a first transmission cycle of the current network message, and determining a second transmission cycle of the standard current message;
if the first transmission cycle is the same as the second transmission cycle, determining the identification result to be that the vehicle has not been retrofitted or modified; or
if the first transmission cycle is different from the second transmission cycle, determining the identification result to be that the vehicle has been retrofitted or modified.

5. The method according to claim 1, wherein comparing the present current value corresponding to the power distribution circuit with the standard current value corresponding to the power distribution circuit to obtain the identification result of the vehicle comprises:
comparing the present current value with the standard current value to determine whether the present current value is the same as the standard current value;
if the present current value is different from the standard current value, determining the identification result to be that the vehicle has been retrofitted or modified; or
if the present current value is the same as the standard current value, determining the identification result to be that the vehicle has not been retrofitted or modified.

6. The method according to any one of claims 1 to 5, wherein acquiring the configuration information of the vehicle comprises:
performing fault detection on the vehicle to determine a fault type of the vehicle; and
if the fault type is a complete vehicle power feed fault, acquiring the configuration information of the vehicle.

7. The method according to any one of claims 1 to 5, wherein after obtaining the identification result of the vehicle, the method further comprises:
in response to determining that the vehicle has been retrofitted by comparing the standard current value with the present current value, determining the retrofitted power distribution circuit to be a target power distribution circuit, and determining a standard current value corresponding to the target power distribution circuit to be a target current value;
performing power-off handling on a retrofitted electronic product;
acquiring a real-time current value corresponding to the target power distribution circuit after the power-off handling, and comparing the real-time current value with the target current value to obtain a comparison result; and
if the comparison result indicates that the real-time current value is equal to the target current value, determining that the target power distribution circuit has a fault.

8. A vehicle identification apparatus, comprising:
a configuration information acquisition module configured to determine a power distribution circuit and a bus circuit corresponding to a controller of a vehicle according to configuration information of the vehicle;
a first determination module configured to determine a present current value corresponding to the power distribution circuit and a present network message corresponding to the bus circuit; and
a second determination module configured to compare the present current value corresponding to the power distribution circuit with a standard current value corresponding to the power distribution circuit, and/or to compare the present network message corresponding to the bus circuit with a standard network message corresponding to the bus circuit, to obtain an identification result of the vehicle, wherein the identification result is used for characterizing whether the vehicle has been retrofitted or modified, and wherein the standard current value is a current value corresponding to the power distribution circuit determined before the vehicle leaves the factory, and the standard network message is a network message corresponding to the bus circuit determined before the vehicle leaves the factory.

9. An electronic device, **characterized by** comprising:
a processor;
a memory having computer-readable instructions stored thereon, wherein when executed by the processor, the computer-readable instructions implement the method according to any one of claims 1 to 7.

10. A computer-readable storage medium, having program codes stored thereon, **characterized in that** when called by a processor, the program codes execute the method according to any one of claims 1 to 7.
